# EUROPEAN PATENT APPLICATION

(11) **EP 0 865 146 A1**
(43) Date of publication of application: **16.09.1998**
(21) Application number: 98301116.4
(22) Date of filing: 16.02.1998
(51) Int. Cl.: H02K 15/00

(54) **Methods and apparatus for casting rotor bars and end rings**

(30) Priority: 03.03.1997 US 810280
(71) Applicant: GENERAL ELECTRIC COMPANY, Schenectady, NY 12345 (US)
(72) Inventor: Buzzell, Colby Elden, Fort Wayne, Indiana 46804 (US); Stecher, Robert Wesley, Jr., Fort Wayne, Indiana 46807 (US)
(74) Representative: Goode, Ian Roy

(57) **Abstract**

Casting apparatus which include, in one embodiment, a pressure block (102) and compressible casting sleeve (104) are described. In the one embodiment, a substantially cylindrical bore (108) extends through the pressure block and compressible casting sleeve is positioned within the pressure block bore. The casting sleeve includes a bore sized to have a rotor core (84) positioned therein, and the casting sleeve is configured so that hydraulic forces between the pressure block and the sleeve cause the sleeve to be compressed, or squeezed, against the rotor core outer surface. Methods for casting rotor bars and end rings are also described.

## Description

This invention relates generally to dynamoelectric machines and, more particularly, to methods and apparatus for casting the rotor bars and end rings of a rotor.

Dynamoelectric machines, such as known AC inducticn motors, typicaliy include a rotor core formed from a plurality of laminations. In one known configuration, each lamination is stamped from a steel sheet and has a plurality of spaced and radially arranged openings adjacent the lamination outer periphery. The laminations are arranged in a stack on a locating pin, or are interlocked or welded together to form the rotor core.

The above described rotor core has opposed substantially planar end surfaces and a substantially cylindrical, longitudinally extending body portion. The rotor core also has a rotor shaft bore and a plurality of rotor bar slots. The rotor bar slots sometimes are referred to as secondary conductor slots. Further details regarding fabrication of rotor cores are set forth in U.S. Patent No. 4,400,872, which is assigned to the present assignee.

Once the rotor core is assembled, rotor bars are cast in the slots and end rings are cast at the opposing ends of the core using, for example, an aluminum casting process. The rotor bars typically extend through the slots and the end rings "short" the bars together at the ends of the rotor core. Such a rotor sometimes is referred to in the art as a "squirrel cage" type rotor.

To cast the rotor bars and end rings, it is known to utilize casting tooling which includes a die part having opposed ends and a cylindrical cavity extending therethrough. The diameter of the cylindrical cavity in the die part is greater than the outer diameter of the rotor core so that the core may be easily located within the cavity. Water cooling ports and channels also are provided in the die part.

First and second end ring tools are utilized in combination with the die part to integrally cast the rotor bars and end rings. Both end ring tools have inserts with circular cross-sectional shapes. The diameter of the inserts is less than the diameter of the die part cavity so that each insert may be at least partially positioned within one end of the cavity. The first tool also has molten aluminum ports and flow channels. The first and second end ring tools also have an end ring cavity and a plurality of fan pockets. Both end ring tools also have alignment pins sized to be inserted within respective ends of the rotor shaft bore of a rotor core.

To cast the rotor bars and end rings with the above described casting tooling, a rotor core is located within the die part cavity so that the center axis of the rotor core shaft bore is substantially coaxial with the center axis of the cavity. Since the die part cavity has a diameter greater than the diameter of the rotor core, there is a clearance space between the rotor core and the die part. The first and second end ring tools are then inserted into respective ends of the die part cavity and pressed against the outer, substantially planer end surfaces of the rotor core. When the rotor core and casting tooling are assembled as described above, the end ring cavities and fan pockets of both end ring tools and the rotor bar slots of the rotor core, are in flow communication with the molten aluminum ports and channels in the first tool.

Molten aluminum is then injected, under high pressure, into the molten aluminum ports in the first tool. The molten aluminum flows through the ports, channels, fan pockets and end ring cavity of the first tool and into the rotor bar slots in the rotor core. The molten aluminum also flows from the rotor bar slots into the end ring cavity and fan pockets of the second tool. Once sufficient aluminum has been injected into the tooling, the injected aluminum is allowed to cool and solidify. Cooling water injected into the water cooling ports and through the cooling channels in the die part facilitates increasing the aluminum cooling rate and prevents die surfaces from overheating. The aluminum solidified in the rotor slots of the rotor core forms the rotor bars, and the aluminum solidified in the end ring cavities and fan pockets of the first and second tools forms end rings and fan blades.

The molten aluminum, in addition to flowing as described above, also typically flows into the spaces between the die part and the outer surface of the rotor core body portion. As explained above, there typically is a clearance space between the outer surface of the cylindrical rotor core body portion and the die part. Also, since the rotor laminations generally are not perfectly aligned, the outer surface of the rotor core body portion may not be perfectly smooth. Such slight lamination misalignments may result in additional spaces between the rotor core and the die part.

The molten aluminum which flows in such spaces solidifies and adheres to the rotor core outer surface. Such solidified aluminum formed on the outer surface of the rotor core typically is referred to as "flash". Especially with open slot rotor cores, a substantial amount of flash typically is formed.

Further, when the molten aluminum is injected into a rotor core, the rotor core heats up and expands more rapidly than the die part. Such rotor core expansion and the aluminum flash cause the rotor core and die part to bind together. Therefore, once the aluminum cools and solidifies, and in order to remove the rotor core from the die part cavity, the rotor core generally must be ejected, e.g., by hydraulic pushers, from the die part cavity.

As a result of the friction between the rotor core and the die part, ejecting the core from the block causes the die part surfaces wear. Such wear creates additional spaces for molten aluminum to flow, and create flash, in subsequent injection processes. The die part typically is replaced once the amount of flash formed using such die part becomes unacceptable.

After ejecting the rotor core from the die part, flash generally is removed from the rotor surfaces by machining or utilizing a brushing operation. For example, a lathe or a steel brush is used to remove the flash. Such machining or brushing adds another set of process step to the rotor fabrication process and causes imperfections in the rotor. As the die part wears, the flash may become heavier and more difficult to remove from the rotor.

With the known tooling described above, reducing the amount of flash is achieved by providing a tight fit between the rotor core and the die part. Such a tight fit increases the difficulty in removing the rotor core from the die part and results in increased wear of the die part. To ease the difficulty in removing the core from the die part, more clearance space can be provided between the core and die part. Such extra clearance space, of course, increases flash.

An object of the present invention is to reduce, if not eliminate, flash formed on the outer surface of the rotor during the rotor bar and end ring casting operation, especially for open slot rotors.

Another object of the present invention is to reduce casting tool wear.

Still another object of the present invention is to reduce the time required to perform the rotor bar and end ring casting operation.

An additional object of the present invention is to substantially eliminate the rotor machining and brushing operations for removing flash formed on the rotor.

These and other objects may be attained by casting apparatus, or tooling, which include, in one embodiment, a compressible casting sleeve configured to be located in a pressure block bore and compressed, or deformed, into a tight fit with a rotor core to substantially eliminate the flow of molten aluminum to the outer surface of the rotor core and prevent the formation of flash on the core during a rotor bar and end ring casting operation. Particularly, in one embodiment, a substantially cylindrical bore extends through the pressure block, and the bore has two end portions and an intermediate portion extending between the end portions. The bore intermediate portion has a diameter greater than the diameter of the bore end portions. A hydraulic port and channel are located in the pressure block, and the channel extends from the port to an opening which opens into the cylindrical bore at a location in the bore intermediate portion.

The compressible casting sleeve has a substantially cylindrical shape and forms a casting sleeve bore. The compressible sleeve also has two opposing end portions and an intermediate portion extending between the end portions. Each end portion has an outer diameter greater than the outer diameter of the sleeve intermediate portion. The casting sleeve is removably positioned within the cylindrical bore of the pressure block. The casting sleeve is sometimes referred to herein as a rotor sleeve.

The casting apparatus also includes first and second end ring tools. Insert portions of the end ring tools have a circular cross-sectional shape with a diameter slightly less than the diameter of the casting sleeve bore. A substantially planar surface of each insert portion may be tightly pressed against the substantially planer end surfaces of the rotor core. Each tool further includes an end ring cavity and fan pockets. The first tool also has molten aluminum ports and channels.

In one exemplary process for casting rotor bars and end rings with the above described casting apparatus, a rotor core is positioned within the casting sleeve bore so that the center axis of the rotor core is substantially coaxial with the center axis of the sleeve bore. The respective insert portions of the end ring tools are then inserted into the opposing, respective ends of the casting sleeve bore. The substantially planer end surface of each insert portion is tightly pressed against the respective substantially planer end surfaces of the rotor core.

Hydraulic fluid is then pumped, under high pressure, through the hydraulic port in the pressure block and the hydraulic fluid flows through the hydraulic channel in the pressure block to the opening which opens into the cylindrical bore. The hydraulic fluid then flows into the pressure block bore between the pressure block bore intermediate portion and the intermediate portion of the casting sleeve. The high pressure of the hydraulic fluid causes the inner surface of the compressible sleeve intermediate portion to be compressed, or deformed, against the substantially cylindrical outer surface of the rotor core body portion and against the insert portions of the end ring tools. Any spaces initially between the casting sleeve and the rotor core and insert portions are substantially eliminated after the casting sleeve intermediate portion is compressed.

Molten aluminum is then injected, under high pressure, into the molten aluminum ports in the first tool. The molten aluminum flows through the ports and channels, and through the fan pockets and end ring cavity, of the first tool. The molten aluminum then flows through the rotor bar slots in the rotor core and into the end ring cavity and fan pockets of the second tool. The intermediate portion of the casting sleeve is compressed against the rotor core and insert portions by hydraulic forces during such injection, and as a result, very little, if any, molten aluminum flows between the casting sleeve and rotor core. Therefore, very little, if any, flash is formed. This result is significant, particularly with respect to open slot rotors.

Once the injected aluminum sufficiently cools and solidifies, the hydraulic pressure is removed so that the casting sleeve "relaxes" and a clearance space is created between the casting sleeve and the rotor core and insert portions. The end ring tools are then withdrawn from the casting sleeve bore, and since very little, if any, flash is formed, the rotor core is easily ejected from the sleeve bore.

By substantially, if not entirely, eliminating flash, there may be no need to machine or brush each rotor subsequent to the above described casting process to remove flash. Substantially eliminating the machining and brushing process facilitates reducing rotor core fabrication cycle time. In addition, ejecting the rotor core from the casting sleeve bore typically may be done without requiring excessive force, thereby facilitating reduced tool wear and extended tool life. The above described casting apparatus therefore enables both reduction of flash and reduction of tool wear.

An embodiment of the invention will now be described by way of example, with reference to the accompanying drawings, in which:

Figure 1 is a top plan view of a rotor lamination.

Figure 2 is a perspective view of a rotor core.

Figure 3 illustrates a prior art casting tool.

Figure 4 illustrates a partial cross-sectional casting apparatus including a compressible casting sleeve.

Figure 5A is a top view of the pressure block shown in Figure 4, and Figure 5B is a side view of the pressure block.

Figure 6A is a top view of the compressible casting sleeve shown in Figure 4, and Figure 6B is a side view of the compressible casting sleeve.

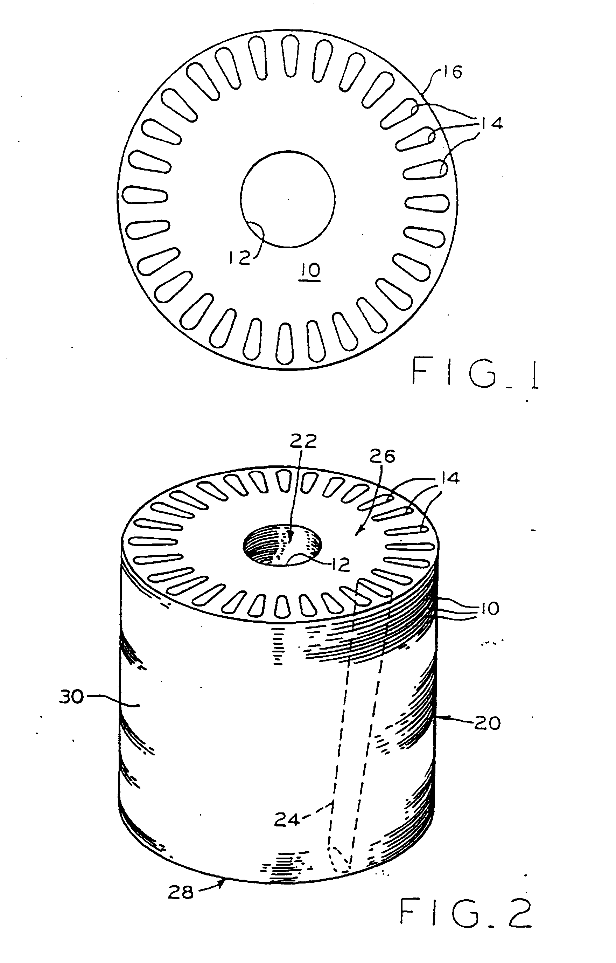

Figure 1 is a top view of a rotor lamination 10. Lamination 10 is stamped from a sheet of steel (not shown) and has a generally circular shape. Lamination 10 includes a central rotor shaft opening 12 and a plurality of spaced and radially arranged openings 14 adjacent an outer periphery 16 of lamination 10.

Figure 2 is a perspective view of a rotor core 20 formed by stacking a plurality of laminations 10 to a height of, for example, between one to six inches. Each rotor shaft opening 12 of each lamination 10 is coaxially aligned with all other rotor shaft openings 12 of all other laminations 10 of core 20 to form rotor shaft bore 22. Radially arranged openings 14 of each lamination 10 are aligned, but are slightly skewed, to form rotor bar slots 24. Laminations 10 are stacked on a pin, interlocked, or welded to form rotor core 20.

Rotor core 20 has opposed, substantially planar end surfaces 26 and 28. Core 20 also has a substantially cylindrical, longitudinally extending body portion 30. Since laminations 10 are not necessarily perfectly aligned, the outer surface of body portion 30 is not perfectly smooth.

Rotor core 20 is a "closed slot" type rotor core because slots 24 are not open at outer periphery 16 of laminations 10. For an "open slot" type rotor core, slots 24 would be open at outer periphery 16 of laminations 10.

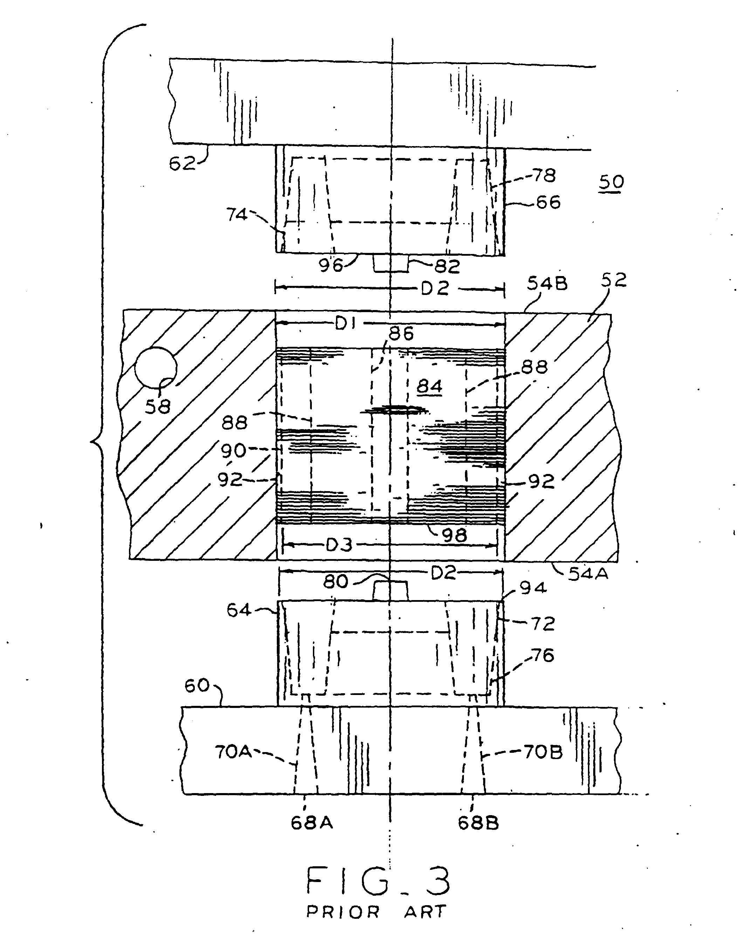

Figure 3 illustrates prior art casting tooling 50 that has been utilized to cast rotor bars and end rings for both "closed slot" and "open slot" type rotors. Casting tooling 50 includes a die part 52 having two ends 54A and 54B and a cylindrical cavity 56 extending therethrough. Diameter D1 of cylindrical cavity 56 in die part 52 is greater than an outer diameter of rotor cores to be processed by tooling 50 so that a rotor core may be easily located within cavity 56. A water cooling port 58 and channel (not shown) also are provided in die part 52.

Casting tooling 50 also includes removable first and second casting dies 60 and 62, sometimes referred to as end ring tools or cavity tooling. Tools 60 and 62 have inserts 64 and 66, respectively, which have circular cross-sectional shapes. Diameter D2 of tools 60 and 62 is less than diameter D1 of die part cavity 56 so that each insert 64 and 66 is at least partially positioned within cavity 56. First tool 60 has molten aluminum ports 68A and 68B and flow channels 70A and 70B, respectively. When first tool 60 is properly positioned within die part cavity 56, flow channels 70A and 70B are in flow communication with cylindrical cavity 56 of die part 52.

End ring tools 60 and 62 also have end ring cavities 72 and 74, respectively, and fan pockets 76 and 78, respectively. End ring cavities 72 and 74 and fan pockets 76 and 78 also are in flow communication with cylindrical cavity 56 of die part 52. Tools 60 and 62 have alignment pins 80 and 82, respectively, sized to be inserted within respective ends of a rotor shaft bore of a rotor core positioned within cavity 56. Tools 60 and 62 may also have water ports and cooling channels (not shown).

To cast rotor bars and end rings with casting tooling 50, a rotor core 84 is located within cavity 56 of die part 52 so that the center axis of a rotor shaft bore 86 is substantially coaxial with the center axis of cavity 56. Although tooling 50 is illustrated in Figure 3 in a generally vertical orientation, tooling 50 could be positioned in a generally horizontal orientation. Rotor core 84 has a plurality of slots 88 and is an "open slot" type rotor core in that slots 88 are open at an outer periphery 90 of core 84.

Rotor core 84 has a diameter D3 which is less than diameter D1 of cylindrical cavity 56. Since diameter D1 of cavity 56 is greater than diameter D3 of rotor core 84, there is a clearance space 92 between rotor core 84 and block 52. Although clearance space 92 is required to enable insertion of core 84 within cavity 56, such clearance space 92 is troublesome with respect to the formation of flash as described below.

With rotor core 84 positioned within cylindrical cavity 56, inserts 64 and 66 of tools 60 and 62, respectively, are inserted into cavity 56 at respective ends 54A and 54B of die part 52. Substantially planar surfaces 94 and 96 of inserts 64 and 66 are pressed against outer, substantially planer end surfaces 98 and 100 of rotor core 84. End ring cavities 72 and 74 and fan pockets 76 and 78 of tools 60 and 62, and rotor bar slots 88 of rotor core 84, are in flow communication with molten aluminum ports 68A and 68B and channels 70A and 70B in first tool 60.

To cast the rotor bars, end rings and fans, molten aluminum is injected, under high pressure, into molten aluminum ports 68A and 68B in first tool 60. Molten aluminum flows through ports 68A and 68B, channels 70A and 70B, fan pockets 76 and end ring cavity 72 of first tool 60 and into rotor bar slots 88 in rotor core 84. The molten aluminum also flows from rotor bar slots 88 into end ring cavity 74 and fan pockets 78 of second tool 62.

Once sufficient aluminum has been injected into tooling 50, the injected aluminum is allowed to cool and solidify. Cooling water is injected into water cooling port 58 and through the cooling channel in die part 52 to facilitate increasing the cooling rate of the molten aluminum. Cooling water may also flow through cooling channels in tools 60 and 62. The aluminum solidified in rotor slots 88 of rotor core 84 forms the rotor bars. The aluminum solidified in end ring cavities 72 and 74 and fan pockets 76 and 78 of tools 60 and 62 form respective end rings and fan blades.

The molten aluminum, in addition to flowing as described above, also flows into clearance space 92 between die part 52 and rotor core outer surface 90. Such aluminum then solidifies and as previously explained is referred to as flash. Particularly with open slot type rotor 84, a substantial amount of flash may be created.

Further, when the molten aluminum is injected into rotor core 84, rotor core 84 heats up and expands more rapidly than die part 52. Such rotor core expansion and the aluminum flash cause rotor core 84 and die part 52 to bind together. Therefore, once the aluminum cools and solidifies, and in order to remove rotor core 52 from die part cavity 56, rotor core 84 generally must be forced, e.g., by hydraulic pushers, from cavity 56. As a result, die part surfaces wear and additional spaces for molten aluminum to flow in subsequent injection processes are created. Eventually, die part 52 is replaced if the amount of flash formed using block 52 becomes unacceptable.

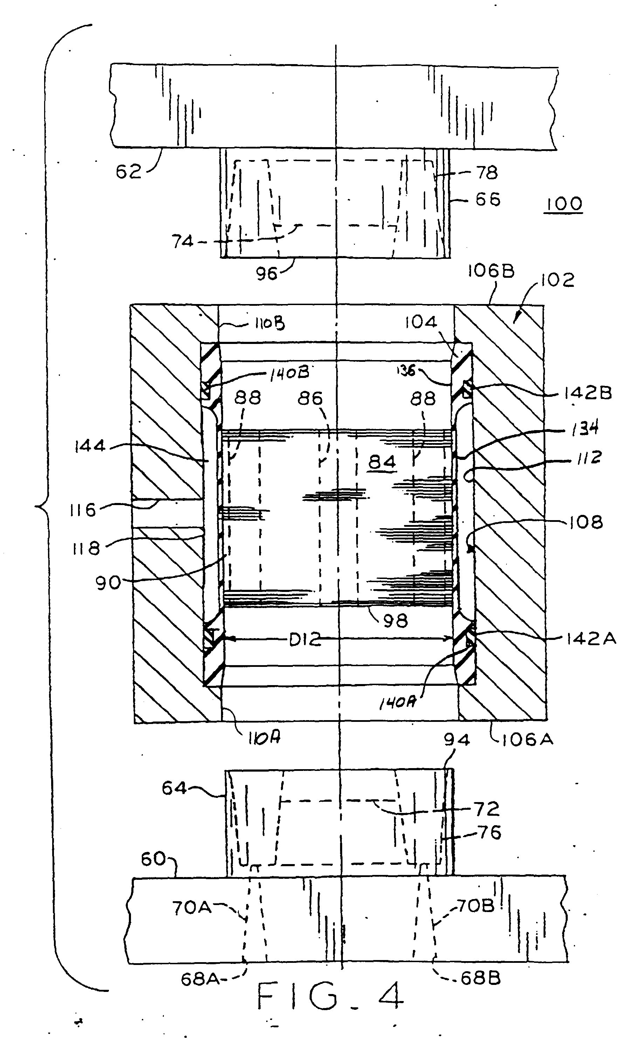

One embodiment of a casting apparatus 100 which may facilitate substantially reducing, if not eliminating, flash on both open and closed slot type rotors is shown in Figure 4. Apparatus 100 includes a pressure block 102 and a compressible, or deformable, casting sleeve 104. Sleeve 104 is sometimes referred to herein as rotor sleeve 104 and is shown in an uncompressed state in Figure 4. Pressure block 102 has first and second ends 106A and 106B and a substantially cylindrical bore 108 therethrough. Bore 108 has two end portions 110A and 110B and an intermediate portion 112 extending between end portions 110A and 110B. Bore intermediate portion 112 has a diameter greater than the diameter of bore end portions 110A and 110B.

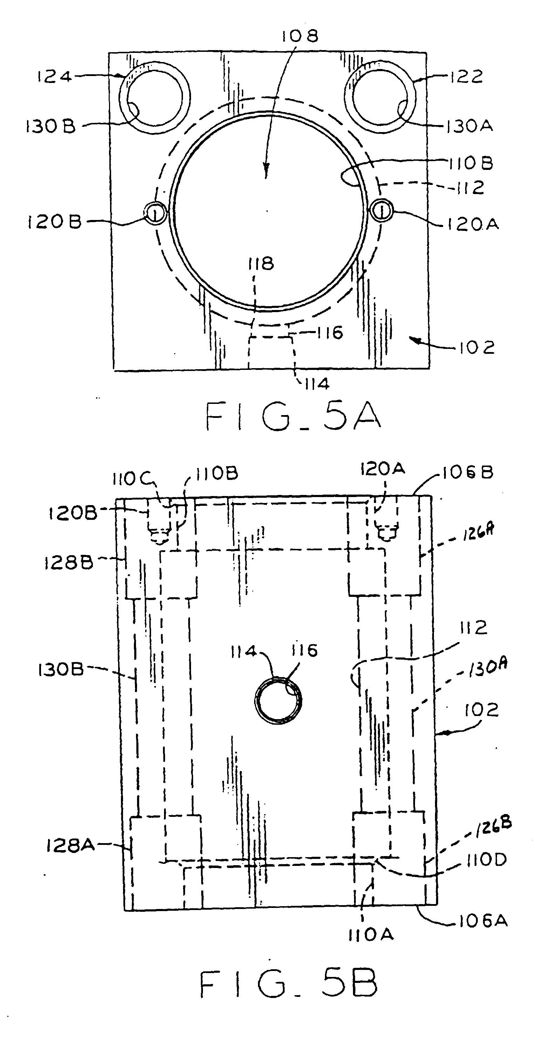

As best shown in Figures 5A and 5B, which are top and side views, respectively, of pressure block 102, a hydraulic port 114 and channel 116 are formed in pressure block 102. Channel 116 extends from port 114 to an opening 118 which opens into cylindrical bore 108 at bore intermediate portion 112.

To facilitate maintaining sleeve 104 within bore 108, first and second bolt openings 120A and 120B are formed in pressure block 102. Bolt openings 120A and 120B are tapered and sized to receive safety bolts (not shown) which extend to bore intermediate portion 112 and contact sleeve 104 to facilitate securing sleeve 104 within bore 108. Rail bores 122 and 124 include respective end portions 126A, 126B and 128A, 128B and intermediate portions 130A, 130B. Bores 122 and 124 are provided so that pressure block 102 may be mounted in a generally horizontal orientation on slide rails (not shown) of a die casting machine. Alternatively, block 102 may be mounted in a generally vertical orientation.

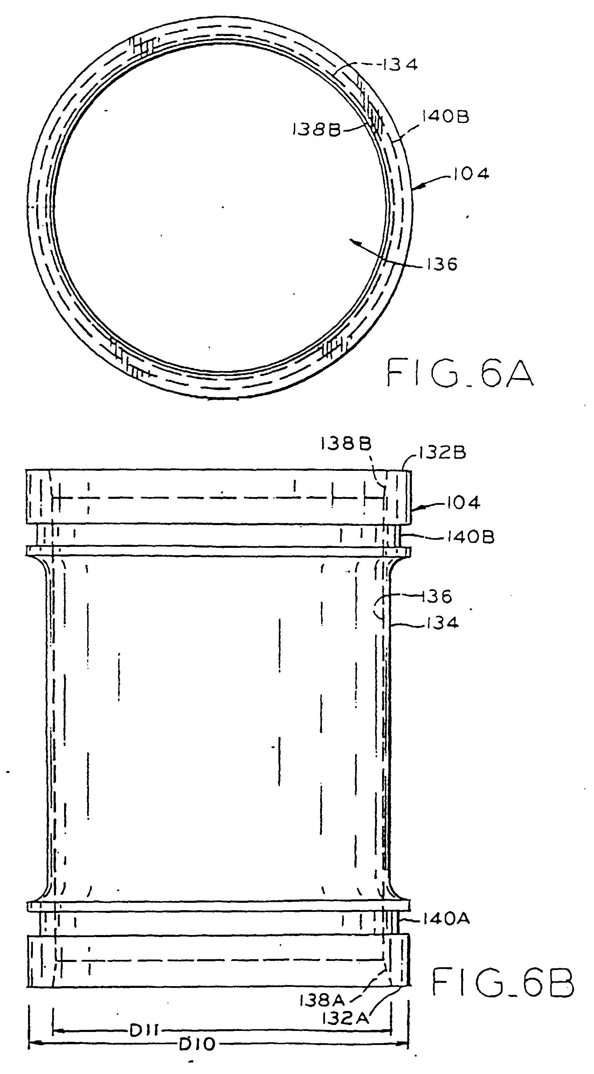

Referring now to Figures 6A and 6B, which are top and side views, respectively, of compressible sleeve 104, sleeve 104 has two end portions 132A and 132B and an intermediate portion 134 extending between end portions 132A and 132B. Each end portion 132A and 132B has an outer diameter D10 greater than outer diameter D11 of sleeve intermediate portion 134. Sleeve 104 has a bore 136 with tapered opposing ends 138A and 138B. Tapers 138A and 138B are provided to facilitate inserting and ejecting a rotor core within sleeve bore 136. Each sleeve end portion 132A and 132B includes an o-ring groove 140A and 140B.

Referring again to Figure 4, rotor sleeve 104 is removably positioned within pressure block bore 108 so that the central axis of sleeve bore 136 is substantially coaxial with the central axis of pressure block bore 108. O-rings 142A and 142B are shown as being positioned within o-ring grooves 140A and 140B, respectively, of rotor sleeve 104. Intermediate portion 134 of sleeve 104 and intermediate portion 112 of pressure block 102 define a fluid chamber 144. O-rings 142A and 142B substantially form fluid seals, with the surface of pressure block 102, to substantially prevent fluid from escaping out ends 110A and 110B of bore 108. Back-up rings (not shown) may be positioned in grooves 140A and 140B adjacent o-rings 142A and 142B to facilitate maintaining o-rings 142A and 142B in grooves 140A and 140B.

Although not shown in Figure 4, it is contemplated that a cooling tube, forming a component of a closed loop cooling system, could extend into fluid chamber 144. In this configuration, each end of the cooling tube is in flow communication with cooling fluid channels (not shown) formed in pressure block 102. The cooling fluid channels are in flow communication with an external heat exchanger (not shown). Such a closed loop cooling system may facilitate increasing the cooling rate for injected molten aluminum.

As shown in Figure 4, casting apparatus 100 also includes removable first and second end ring tools 60 and 62. Insert portions 64 and 66 of tools 60 and 62 have a diameter D2 slightly less than inner diameter D12 of casting sleeve bore 136. Tools 60 and 62 shown in Figure 4 are similar to tools 60 and 62 shown in Figure 3, except that as shown in Figure 4, alignment pins 80 and 82 are eliminated. Such alignment pins are unnecessary in apparatus 100 since hydraulic forces, as described below, result in axially centering the core in sleeve 104. Of course, alignment pins could be used if desired.

In one form of operation, and in one particular process for casting rotor bars and end rings, rotor core 84 is positioned within casting sleeve bore 136 so that the center axis of rotor core 84 is substantially coaxial with the center axis of sleeve bore 136. Insert portions 94 and 96 of tools 60 and 62 are then inserted into opposing, respective ends of casting sleeve bore 136. Substantially planer end surfaces 94 and 96 of each insert portion 64 and 66 are tightly pressed against the respective substantially planer end surfaces 98 and 100 of rotor core 84.

Hydraulic fluid is then pumped, under high pressure, e.g., 5000 psi, through hydraulic port 114 in pressure block 102 and the hydraulic fluid flows through hydraulic channel 116 to opening 118. The hydraulic fluid then flows into fluid chamber 144 and the high pressure of the hydraulic fluid causes casting sleeve intermediate portion 134 to be compressed, or deformed, against rotor core 84 and insert portions 64 and 66. As a result, any spaces initially between rotor sleeve 104, rotor core 84, and insert portions 64 and 66 are substantially eliminated. Also, if the rotor core is an open slot type rotor core, casting sleeve 104 will substantially blocks the flow paths at the open ends of the slots 88.

Molten aluminum is then injected, under high pressure, into molten aluminum ports 68A and 68B in first tool 60. The molten aluminum flows through ports 68A and 68B and channels 70A and 70B of first tool 60 and through fan pockets 76 and end ring cavity 72. The molten aluminum also flows through rotor bar slots 88 in rotor core 84 and into end ring cavity 74 and fan pockets 78 of second tool 62.

Since casting sleeve intermediate portion 134 is compressed, or squeezed, against the rotor core, very few, if any, spaces are between the rotor core and rotor sleeve 104 as the molten aluminum is injected into apparatus 100. Therefore, very little, if any, aluminum flows between core 84 and sleeve 104. As a result, very little, if any, flash is formed.

Once the injected aluminum sufficiently cools and solidifies, the hydraulic pressure is removed so that rotor sleeve 104 "relaxes" and is not pressed against rotor core 84 and insert portions 64 and 66. When rotor sleeve 104 relaxes, inserts 64 and 66 are removed from casting sleeve bore 136, and since very little, if any, flash is formed, the rotor core is easily ejected from bore 136.

Substantially, if not entirely, eliminating flash advantageously also substantially eliminates subsequent rotor brushing or machining operations, which facilitates reducing rotor core fabrication cycle time. In addition, by ejecting the rotor core from rotor sleeve 104 without requiring excessive force, sleeve wear and maintenance requirements are believed to be reduced as compared to the wear and maintenance required with die part 52 (Figure 3).

Further, a perhaps unexpected and surprising result may be obtained in that since casting sleeve intermediate portion 134 is compressed against the rotor core by the hydraulic fluid, good thermal heat transfer is provided from rotor core 84 to rotor sleeve 104. Such heat is transferred to the hydraulic fluid in fluid chamber 144, and by placing a closed loop cooling tube within fluid chamber 144 to cool the hydraulic fluid, such heat transfer facilitates reducing the time required for the aluminum to solidify thereby possibly even further reducing the rotor fabrication time. Moreover, a faster cooling time for the aluminum may reduce aluminum-to-lamination "sticking", which is desirable.

Various rotor sleeves 104 could be manufactured for use with a particular pressure block 102, and such sleeves 104 could be manufactured to have different diameter bores depending on the diameter of the various rotor cores to be processed by apparatus 100. Also, sleeve 104 may be fabricated from a metal, such as steel, so that sleeve intermediate portion 134 may be compressed, e.g., by 5 to 10 mils. Pressure block 102 and first and second tools 60 and 62 also may be fabricated from high strength steel such as Inconel 718.

Maintaining a plurality of different casting, or rotor, sleeves having different diameter bores is believed to be much easier and inexpensive than maintaining a plurality of known prior art die parts having different diameter cavities. Further, since flash may be substantially eliminated using such casting sleeves, the useful life of such casting sleeves also is believed to be longer than the useful life of such die parts.

From the preceding description, it is evident that the objects of the invention are attained. Although embodiments if the invention have been described and illustrated in detail, it is to be clearly understood that the same is intended by way of illustration and example only and is not to be taken by way of limitation. For example, the hydraulic fluid could be circulated, under pressure, through an external heat exchanger. Such circulation may facilitate carrying heat away even faster from the rotor core and rotor sleeve and may even further reduce the time required for the aluminum to cool.

## Claims

1. Casting apparatus for casting rotor bars and end rings of a rotor for an electric motor, said casting apparatus comprising:
a pressure block having a bore therein;
a compressible rotor sleeve positioned within said pressure block bore, at least a portion of said sleeve being compressed when subjected to a predetermined pressure applied to an outer surface thereof;
at least one hydraulic fluid port located in said pressure block bore; and
a hydraulic fluid channel located in said pressure block through which pressurized fluid applied to said fluid port can be delivered to said rotor sleeve outer surface.

2. Casting apparatus in accordance with Claim 1 wherein said rotor sleeve comprises first and second end portions and an intermediate portion extending between said end portions, and wherein said first and second end portions of said sleeve each includes a groove formed in and extending around an outer periphery of said end portion, and said sleeve further comprises an o-ring positioned within each of said grooves.

3. Casting apparatus in accordance with Claim 2 wherein a back-up ring is positioned within each of said grooves, and said o-rings substantially form hydraulic fluid seals with, and between, said pressure block and said rotor sleeve.

4. Casting apparatus in accordance with Claim 1 wherein a bore extends through said rotor sleeve and wherein said casting apparatus further comprises a first end ring tool comprising a first insert portion configured for being at least partially inserted within a first end of said rotor sleeve bore, at least one port located in said first tool and an aluminum flow channel located in said first tool through which molten aluminum applied at said first tool port can be delivered to a rotor core positioned in said rotor sleeve.

5. Casting apparatus in accordance with Claim 4 wherein said first tool further comprises a first end ring cavity and at least a first fan pocket.

6. Casting apparatus in accordance with Claim 5 wherein said first end ring cavity and said first fan pocket of said first tool are in flow communication.

7. Casting apparatus in accordance with Claim 4 wherein said first insert portion has a diameter that is substantially equal to the diameter of a first end surface of a rotor core, and wherein said first insert portion includes a first surface configured to be pressed against the first end surface of the rotor core.

8. Casting apparatus in accordance with Claim 4 further comprising a second end ring tool comprising a second insert portion configured for being at least partially inserted within a second end of said rotor sleeve bore, said second insert portion having a diameter that is substantially equal to the diameter of a second end surface of the rotor core, said second insert portion further having a second surface configured to be pressed against the second end surface of the rotor core, said second tool further comprising a second end ring cavity and at least a second fan pocket, said second end ring cavity and said second fan pocket being in flow communication.

9. Casting apparatus in accordance with Claim 1 wherein said pressure block further comprises at least one cooling water port and a cooling water channel in flow communication with said cooling water port.

10. Casting apparatus in accordance with Claim 1 further comprising a heat exchanger coupled to said hydraulic fluid port.

11. Casting apparatus in accordance with Claim 1 wherein said pressure block bore is substantially cylindrical and has opposing end portions and an intermediate portion extending between said end portions, said pressure block bore intermediate portion having a diameter greater than the diameter of said pressure block bore end portions.

12. Casting apparatus in accordance with Claim 11 wherein said rotor sleeve and said pressure block form a fluid channel.

13. Apparatus in accordance with Claim 12 wherein said rotor sleeve further comprises first and second end portions and an intermediate portion extending between said end portions, said rotor sleeve further comprising a bore sized to have at least a portion of the rotor core positioned therein, said sleeve end portions having an outer diameter greater than the outer diameter of said sleeve intermediate portion, and said fluid channel being formed, at least in part, by said sleeve intermediate portion and said pressure block bore intermediate portion.

14. A casting sleeve for use in casting rotor bars and end rings for a rotor core, said casting sleeve comprising first and second end portions and an intermediate portion extending between said end portions, said casting sleeve further comprising a casting sleeve bore sized to have at least a portion of the rotor core positioned therein.

15. A casting sleeve in accordance with Claim 14 wherein said first and second sleeve end portions include a groove formed in and extending around an outer periphery of said end portion, and said casting sleeve further comprises an o-ring positioned within each of said grooves.

16. A casting sleeve in accordance with Claim 14 wherein said sleeve end portions have an outer diameter greater than the outer diameter of said sleeve intermediate portion.

17. A casting sleeve in accordance with Claim 16 wherein said casting sleeve is constructed of a material which is sufficiently elastic so that at least a portion of said sleeve intermediate portion may be compressed against at least a portion of the rotor core.

18. A casting sleeve in accordance with Claim 14 wherein said sleeve is sized to be positioned within a cylindrical bore of a pressure block, the pressure block having first and second ends and a hydraulic fluid port in an outer surface thereof, the pressure block further having a hydraulic fluid channel extending through the pressure block from the hydraulic fluid port to an opening in a surface of the pressure block at the cylindrical bore.

19. A casting sleeve in accordance with Claim 18 wherein said end portions of said casting sleeve have an outer diameter greater than the outer diameter of said sleeve intermediate portion and said first and second end portions of said casting sleeve include a groove formed in and extending around an outer periphery of said sleeve end portion, said casting sleeve further comprising an o-ring positioned within each of said grooves, and said o-rings substantially form hydraulic fluid seals with, and between, the pressure block and said casting sleeve.

20. A method for forming rotor bars and end rings for a rotor core using an apparatus including a pressure block comprising first and second ends and a substantially cylindrical bore extending therethrough, the apparatus further including a sleeve positioned within the cylindrical bore of the pressure block, the sleeve having a bore sized to have at least a portion of the rotor core positioned therein, the apparatus further including first and second end ring tools having first and second insert portions sized to at least be partially inserted into the sleeve bore, said method comprising the steps of:
positioning a rotor core within the casting sleeve bore;
pressing surfaces of the first and second insert portions against substantially planar end surfaces of the rotor core; and
compressing at least a portion of the sleeve against at least a portion of the rotor core outer surface.

21. A method in accordance with Claim 20 wherein a fluid channel is formed between at least a portion of the sleeve and a portion of the pressure block, and compressing at least a portion of the sleeve against at least a portion of the rotor core outer surface comprises the step of forcing fluid under pressure into the fluid channel.

22. A method in accordance with Claim 20 wherein the first end ring tool has at least one molten aluminum port and channel therein, and said method further comprises the steps of:
injecting molten aluminum in the molten aluminum port and channel of the first tool;
allowing the aluminum to cool and substantially solidify;
substantially decompressing the compressed portion of sleeve so that the sleeve is not compressed against the portion of the rotor core outer surface;
removing at least one of the insert portions from within the sleeve bore; and
ejecting the rotor core from the sleeve bore.

23. Apparatus for use in casting rotor bars and end rings for a rotor core, said apparatus comprising a sleeve comprising a bore sized to have at least a portion of the rotor core positioned therein, said sleeve configured to have at least a portion of said sleeve compressed against at least a portion of the rotor core outer surface.

24. Apparatus in accordance with Claim 23 further comprising a pressure block comprising first and second ends and a substantially cylindrical bore extending therethrough, the cylindrical bore sized to have said sleeve substantially located therein, a hydraulic fluid port formed in an outer surface of said pressure block, a hydraulic fluid channel extending through said pressure block from said hydraulic fluid port to an opening in a surface of said pressure block at the cylindrical bore.

25. Apparatus in accordance with Claim 24 wherein said sleeve comprises first and second end portions and an intermediate portion extending between said end portions, and wherein said first and second end portions of said sleeve include a groove formed in and extending around an outer periphery of said end portion, and said sleeve further comprises an o-ring positioned within each of said grooves.

26. Apparatus in accordance with Claim 25 wherein a back-up ring is positioned within each of said grooves, and said o-rings substantially form hydraulic fluid seals with, and between, said pressure block and said sleeve.

27. Apparatus in accordance with Claim 25 further comprising a first end ring tool including a first insert portion configured for being at least partially inserted within a first end of said sleeve bore, said first tool further comprising at least one port in an outer surface thereof and an aluminum flow channel extending from said port and at least partially through said first tool.

28. Apparatus in accordance with Claim 27 wherein said first tool further comprises a first end ring cavity and at least a first fan pocket.

29. Apparatus in accordance with Claim 28 wherein said first end ring cavity and said first fan pocket of said first tool are in flow communication.

30. An apparatus in accordance with Claim 24 further comprising a second tool comprising a second insert portion configured for being at least partially inserted within a second end of said sleeve bore, said second insert portion having a diameter that is substantially equal to the diameter of a second end surface of the rotor core, said second insert portion further having a second surface configured to be pressed against the second end surface of the rotor core, said second tool further comprising a second end ring cavity and at least a second fan pocket, said second end ring cavity and said second fan pocket being in flow communication.
